# EUROPEAN PATENT SPECIFICATION

(11) **EP 2 380 931 B1**
(45) Date of publication and mention of the grant of the patent: **25.06.2014**
(21) Application number: 10731315.7
(22) Date of filing: 12.01.2010
(51) Int. Cl.: C08L 61/06, C08J 9/04, C08K 5/053, C08K 5/3447, C08J 9/00, C08K 5/3467

(54) **EXPANDABLE RESOL-TYPE PHENOLIC RESIN MOLDING MATERIAL, METHOD FOR PRODUCING THE SAME, AND PHENOLIC RESIN FOAM**
DEHNBARES RESOLARTIGES PHENOLHARZFORMMATERIAL, VERFAHREN ZU SEINER HERSTELLUNG UND PHENOLHARZSCHAUMSTOFF
MATIÈRE À MOULER EN RÉSINE PHÉNOLIQUE DE TYPE RÉSOL EXPANSIBLE, SON PROCÉDÉ DE PRODUCTION, ET MOUSSE DE RÉSINE PHÉNOLIQUE

(30) Priority: 19.01.2009 JP 2009008780; 20.02.2009 JP 2009037371
(43) Date of publication of application: 26.10.2011
(73) Proprietor: Asahi Organic Chemicals Industry Co., Ltd., Nobeoka-shi Miyazaki 882-0032 (JP)
(72) Inventor: TAKAHASHI, Hiroo, Niwa-gun Aichi 480-0105 (JP)
(74) Representative: Albrecht, Thomas
(86) International application number: PCT/JP2010/050461
(87) International publication number: WO 2010/082646

(56) References cited:
- JP-A- 4 045 874
- JP-A- S6 244 434
- JP-A- 60 149 639
- JP-A- 60 161 438
- JP-A- 2000 230 070
- JP-A- 2006 335 868
- JP-A- 2007 070 507

## Description

### [Technical Field]

This invention relates to a foamable resol type phenolic resin molding or forming material, a process for producing the same and a phenolic resin foamed product. More specifically, it relates to a foamable resol type phenolic resin molding or forming material from which a phenolic resin foamed product having in particular an improved appearance, having practical strength and brittleness resistance and having a high pH and excellent corrosion-inhibiting capability can be produced under advantageous foamability and curability, and a process for producing the same.

### [Background Art]

Conventionally, a phenolic resin foamed product is used as a heat insulating material in building and other industrial fields, since it is excellent in heat insulating property and flame-retarding and fire-resisting properties.

However, the above phenolic resin foamed product is generally produced by foaming and curing a foamable phenolic resin molding or forming material containing at least a liquid resol type phenolic resin, a foaming agent and an acid curing agent. Since the above curing agent is selected from inorganic acids such as sulfuric acid or organic acids such as benzenesulfonic acid, toluenesulfonic acid and xylenesulfonic acid, the acid curing agent in the resultant phenolic resin foamed product is extracted with water, for example, when the foamed product is wet with rain, etc. There is therefore involved a problem that when a metal member is in contact with the above phenolic resin foamed product or when a metal member is present in the vicinity of the above foamed product, therefore, the metal member is liable to be corroded.

In the use thereof as a building material, excellent mechanical performances (strength and brittleness resistance) have been required besides the above metal corrosion problem. As techniques for satisfying such requirements, Patent Documents 1 and 2 are proposed. Further, even when the density is decreased from the viewpoint of a decrease in weight or a decrease in cost, it is desired to develop a phenolic resin foamed product that does not cause any deterioration in an appearance or the above performances.

Further, the technique described in the above patent documents in some cases involve an underlying problem that obstacles are brought about to foaming or curing, since a basic nitrogen-containing bridged cyclic compound used therein, hexamethylenetetramine in particular, is easily affected with the action of the liquid resol type phenolic resin or an acid curing agent.

### [Prior Art Documents]

### [Patent Documents]

Patent Document 1: JP2006-335868A
Patent Document 2: JP2007-70507A

### [Summary of the Invention]

### [Problems to be Solved by the Invention]

This invention has been made under the above circumstances. It is an object of this invention to provide a foamable phenolic resin molding or forming material that can give a phenolic resin foamed product having in particular an improved appearance, keeping mechanical performances from degrading so that no practical problem is caused even when it has a density of 35 kg/m³ as compared with mechanical performances (strength and brittleness resistance) of a foamed product having a standard density of about 40 kg/m³, and having a high pH and excellent corrosion-inhibiting capability. It is another object of this invention to provide a process for producing a foamable phenolic resin molding or forming material that does not bring about obstacles during foaming and curing. It is further another object of this invention to provide a phenolic resin foamed product having the above performances, obtained by foaming and curing the above foamable phenolic resin molding or forming material.

### [Means to Solve the Problems]

For achieving the above objects, the present inventors have made diligent studies. As a result, it has been found that a phenolic resin foamed product obtained by incorporating a nitrogen-containing bridged cyclic compound having an adjusted specific grain size into a foamable phenolic resin molding or forming material is less susceptible to a decrease in strength and brittleness resistance even when its density is decreased, maintains excellent metal corrosion-inhibiting capability and has an improved appearance, and further that the defect that a foamable phenolic resin molding or forming material has during foaming and curing can be overcome by adding the above nitrogen-containing bridged cyclic compound when a liquid resol type phenolic resin and an acid curing agent are mixed in the production of the foamable phenolic resin molding or forming material. Accordingly, this invention has been completed.

That is, this invention provides
(1) a foamable resol type phenolic resin molding or forming material that is a foamable resol type phenolic resin molding or forming material comprising a liquid resol type phenolic resin, foaming agent, a foam stabilizer, an acid curing agent and an additive, the additive being a nitrogen-containing bridged cyclic compound having an average particle diameter of 80 µm or less,
(2) a foamable resol type phenolic resin molding or forming material as recited in the above (1), wherein the nitrogen-containing bridged cyclic compound is hexamethylenetetramine,
(3) a foamable resol type phenolic resin molding or forming material as recited in the above (1) or (2), which further contains a plasticizer,
(4) a foamable resol type phenolic resin molding or forming material as recited in any one of the above (1) to (3), wherein the foaming agent contains isopropyl chloride,
(5) a phenolic resin foamed product formed by foaming and curing the foamable resol type phenolic resin molding or forming material recited in any one of the above (1) to (4),
(6) a phenolic resin foamed product as recited in the above (5), which has a density of 20 to 40 kg/m³, a pH of 4.0 or more, a compressive strength of 10 N/cm² or more and a brittleness resistance of 20 % or less,
(7) a process for producing a foamable resol type phenolic resin molding or forming material containing a liquid resol type phenolic resin, a foaming agent, a foam stabilizer, an acid curing agent and an additive, which comprises adding, as the above additive, a nitrogen-containing bridged cyclic compound having an average particle diameter of 80 µm or less when said liquid resol type phenolic resin and said acid curing agent are mixed,
(8) a process as recited in the above (7), wherein the nitrogen-containing bridged cyclic compound is hexamethylenetetramine,
(9) a process as recited in the above (8), wherein the nitrogen-containing bridged cyclic compound is added in the form of a mixture thereof with a plasticizer for a phenolic resin,
(10) a process as recited in the above (9), wherein the plasticizer for a phenolic resin is at least one member selected from a polyester polyol, a polyether polyol and glycols,
(11) a process as recited in any one of the above (7) to (10), wherein the foaming agent contains isopropyl chloride, and
(12) a process as recited in any one of the above (9) to (11), which comprises continuously producing a phenolic resin molding or forming material by feeding a liquid resol type phenolic resin, a foaming agent, a foam stabilizer, an acid curing agent and an additive to a mixer, stirring and mixing them to obtain a foamable resol type phenolic resin composition, injecting the thus-obtained composition between upper and lower face materials and heating the composition to foam and cure it, wherein said additive obtained by pre-mixing a nitrogen-containing bridged cyclic compound and a plasticizer for a phenolic resin is fed to the mixture.

### [Effect of the Invention]

The foamable resol type phenolic resin molding or forming material of this invention uses a nitrogen-containing bridged cyclic compound (additive) having an adjusted specific particle size as an additive, so that the phenolic resin foamed product obtained has an improved appearance even if it has a low density, and it is less susceptible to a decrease in strength and brittleness resistance and maintains excellent metal corrosition-inhibiting capability.

In the above process for producing a foamable resol type phenolic resin molding or forming material, a nitrogen-containing bridged cyclic compound of which the particle size is adjusted to the specified particle size is added as an additive when the liquid resol type phenolic resin and the acid curing agent are mixed, so that the holding of the nitrogen-containing bridged cyclic compound in the prepared molding or forming material is constant. Therefore, not only the influence by the liquid resol type phenolic resin and the acid curing agent can be inhibited to a less degree, but also the dispersion in the molding or forming material by a volume effect is rendered uniform, so that the variability of foaming and curing can be advantageously overcome.

Further, when the above nitrogen-containing bridged cyclic compound is used as a mixture in which it is dispersed in a plasticizer for a phenolic resin which plasticizer has small compatibility with the above nitrogen-containing bridged cyclic compound, it is no longer necessary to cope with the deterioration of powder flowability caused by the presence of fine particles, and it becomes possible to use the nitrogen-containing bridged cyclic compound in the form of powder, so that not only the feeding device to a mixing head can be simplified and reduced in cost, but also the efficiency of mixing can be improved, and the advantage is that the operation of mixing can be advantageously carried out.

Further, the phenolic resin foamed product of this invention is produced by foaming and curing the above foamable resol type phenolic resin molding or forming material, so that it can maintain practical performances like what are described above even if it is decreased in density. It can hence contribute to the decrease of a construction material in weight and the decrease of a cost.

### [Preferred Embodiments of the Invention]

First, the foamable resol type phenolic resin molding or forming material (to be sometimes simply referred to as "phenolic resin molding or forming material" hereinafter) will be explained.

### [Foamable resol type phenolic resin molding or forming material]

The foamable resol type phenolic resin molding or forming material of this invention is a foamable resol type phenolic resin molding or forming material containing a liquid resol type phenolic resin, a foaming agent, a foam stabilizer, an acid curing agent and an additive, and has a feature that the above additive is a nitrogen-containing bridged cyclic compound having an average particle diameter of 80 µm or less.

### (Liquid resol type phenolic resin)

The liquid resol type phenolic resin in the phenolic resin molding or forming material of this invention is not specially limited, and it can be selected from conventionally known liquid resol type phenolic resins as required. For example, there can be used liquid resol type phenolic resins prepared by reacting phenols typified by phenol, cresol, xylenol, p-alkylphenol, p-phenylphenol and resorcin and derivatives of these with aldehydes typified by formaldehyde, p-formaldehyde, furfural and acetaldehyde in the presence of an alkali catalyst typified by sodium hydroxide, potassium hydroxide and calcium hydroxide, and carrying out neutralization treatment and/or dehydration treatment under reduced pressure as required. The mixing ratio of the phenols and aldehydes is not specially limited, and it can be normally set in a molar ratio in the range of 1.0 : 1.5 - 3.0, while it is preferably in the range of 1.0 : 1.8 - 2.5. Further, the phenols, the aldehydes and the catalysts may be used singly each or in combination of two or more compounds for each, respectively.

The thus-prepared liquid resol type phenolic resin preferably has a viscosity, measured at 25°C, of 1,000 to 80,000 mPa·s, in particular in the range of 7,000 to 50,000 mPa·s, and an adjusted moisture percentage of 4 to 16 mass%, in particular in the range of 6 to 14 mass%.

### (Foaming agent)

Examples of the foaming agent in the phenolic resin molding or forming material of this invention include organic non-reactive foaming agents typified by chlorinated aliphatic hydrocarbons such as dichloroethane, propyl chloride, isopropyl chloride, butyl chloride, isobutyl chloride, pentyl chloride and isopentyl chloride, low-boiling-point aliphatic hydrocarbons such as propane, butane, pentane, hexane, heptanes, cyclopropane, cyclobutane, cyclopentane, cyclohexane and cycloheptane, ether compounds such as isopropyl ether, and hydrochlorofluorocarbon compounds such as trichloromonofluoromethane and trichlorotrifluoroethane. These foaming agents may be used singly, or two or more of them may be used in combination. The above "non-reactive foaming agent" refers to a substance that itself volatilizes under a foaming condition and can cause a phenolic resin to foam.

Of these foaming agents, a chlorinated aliphatic hydrocarbon or a mixture of a chlorinated aliphatic hydrocarbon as a main component with a low-boiling-point aliphatic hydrocarbon, and above all, a combination of isopropyl chloride with normal pentane is preferred. The amount of the foaming agent per 100 parts by mass of the above liquid resol type phenolic resin is selected in the range of 1 to 20 parts by mass, while it is preferably 5 to 20 parts by mass. When the amount is less than 1 part by mass, no foamed product having an originally intended density can be obtained. When it exceeds 20 parts by mass, foams are destroyed with an increase in foaming pressure, and an appearance and insulating performance (thermal conductivity) tend to be degraded. Besides the above foaming agents, gases such as nitrogen gas, oxygen gas, argon gas and carbon dioxide gas, or mixture gases of these may be used.

### (Foam stabilizer)

The foam stabilizer in the phenolic resin molding or forming material of this invention is not specially limited, while a nonionic surfactant is preferably used. Other anionic surfactant(s) may be used alone or in combination as required. Examples of the above nonionic surfactant include a polysiloxane-containing surfactant, a polyoxyethylene sorbitan fatty acid ester and a castor oil ethylene oxide adduct. These may be used singly, or two or more of them may be used in combination. The amount of the foam stabilizer per 100 parts by mass of the liquid resol type phenolic resin is normally selected in the range of 1 to 5 parts by mass, while it is preferably 2 to 4 parts by mass.

### (Acid curing agent)

Examples of the acid curing agent that is generally used in the phenolic resin molding or forming material of this invention include inorganic acids such as sulfuric acid and phosphoric acid, and organic acids such as benzenesulfonic acid, ethylbenzenesulfonoic acid, p-toluenesulfonic acid, xylenesulfonic acid, naphtholsulfonic acid and phenolsulfonic acid, while the acid curing agent shall not be limited to these. These may be used singly, or two or more of them may be used in combination. The amount of the above acid curing agent per 100 parts by mass of the liquid resol type phenolic resin is generally selected in the range of 5 to 50 parts by mass, while it is preferably 10 to 39 parts by mass.

### (Additive)

The phenolic resin molding or forming material of this invention uses a nitrogen-containing bridged cyclic compound as an essential additive. The particle size of the above nitrogen-containing bridged cyclic compound is required to be adjusted to 80 µm or less as an average particle diameter, and it is preferably 70 µm or less, and from the viewpoint of an improvement in the degree of mixing and dispersion in the molding or forming material by a volume effect, it is particularly preferably 50 µm or less. When the average particle diameter exceeds 80 µm, the effect produced by grain refining cannot be any longer exhibited. The lower limit of the average particle diameter is not specially limited. Generally, when particles are decreased in diameter to be fine, the compositing of the particles by a coagulating action takes place to deteriorate the flowability of a powder, and the direct or indirect supply of the powder to a mixing head (high speed mixer) (immediate mixing thereof with a liquid resol type phenolic resin component or a foaming agent component) in the continuous production line of a foamed product is made difficult. Therefore, such fine particles are suitably used in the form of a mixture with a liquid substance that generally do not have any extreme effect on a foamed product, that has little compatibility with the nitrogen-containing bridged cyclic compound, that has a minimum viscosity capable of preventing the particles from settling and that has compatibility with the liquid phenolic resin.

The liquid substance is not specially limited so long as it has the above-described properties, while it is advantageous to select at least one member from a polyester polyol, a polyether polyol and glycols, for example, among plasticizers as optional components to be described later. The above technique is applied not only to fine particles, but also to particle sizes of particles that contain fewer composite particles and are capable of being supplied as a powder, whereby the supply device to a mixing head can be simplified and reduced in cost, and moreover, it can provide an advantage that the operation of mixing can be advantageously carried out like the efficiency of mixing can be improved.

As the above nitrogen-containing bridged cyclic compound, hexamethylenetetramine is particularly preferred in view of availability and capability of exhibiting an effect. And, it has been found that when the particle size of the nitrogen-containing bridged cyclic compound is adjusted to an average particle diameter of 80 µm or less and when the thus-prepared nitrogen-containing bridged cyclic compound is incorporated into the foamable phenolic resin molding or forming material, there is produced an unexpected effect that even if the density of a foamed product is decreased, the appearance of the foamed product is nevertheless improved without impairing the metal corrosion-inhibiting capability or greatly decreasing the strength and brittleness resistance.

The amount of the above nitrogen-containing bridged cyclic compound per 100 parts by mass of the liquid resol type phenolic resin is generally selected in the range of 0.1 to 10 parts by mass, while it is preferably 0.3 to 7 parts by mass. When the above amount is less than 0.1 part by mass, no intended object can be achieved. When it exceeds 10 parts by mass, the curing tends to be deteriorated.

### (Optional components)

The phenolic resin molding or forming material of this invention may contain a plasticizer and an inorganic filler as required.

### <Plasticizer>

The plasticizer that may be incorporated into the phenolic resin molding or forming material of this invention as required can be selected from those which impart flexibility to foam walls of a phenolic resin foamed product to be obtained and which work to inhibit the insulating performance from deteriorating with time.

Examples of the above plasticizer include polyester polyol, polyether polyol, glycols, triphenyl phosphate, dimethyl terephthalate and dimethyl isophthalate. These may be used singly, or two or more of them may be used in combination.

In this invention, the above plasticizer is generally used in an amount in the range of 0.1 to 20 parts by mass per 100 parts by mass of the above liquid resol type phenolic resin. When the amount of the plasticizer is in the above range, there is well produced an effect that flexibility is imparted to foam walls without impairing other performances of a phenolic resin foamed product obtained. The above amount of the plasticizer for use is preferably 0.5 to 15 parts by mass, more preferably 1 to 12 parts by mass.

### <Inorganic filler>

The inorganic filler that may be incorporated into the phenolic resin molding or forming material of this invention as required can be selected from those which can effectively impart flame-retarding capability and/or corrosion-inhibiting capability to a phenolic resin foamed product to be obtained.

Examples of the above inorganic filler include metal hydroxides and oxides such as aluminum hydroxide, magnesium hydroxide, calcium oxide, magnesium oxide, aluminum oxide and zinc oxide, metal powders of zinc, etc., and metal carbonates such as calcium carbonate, magnesium carbonate, barium carbonate and zinc carbonate. Of these, aluminum hydroxide and/or calcium carbonate are/is preferred. These may be used singly, or two or more of them may be used in combination. The amount of the inorganic filler per 100 parts by mass of the liquid resol type phenolic resin is normally selected in the range of 0.1 to 30 parts by mass, while it is particularly preferably approximately 1 to 10 parts by mass.

### [Process for producing foamable resol type phenolic resin molding or forming material]

According to this invention, there is also provided a process for producing the above foamable resol type phenolic resin molding or forming material.

The process for producing a phenolic resin molding or forming material, provided by this invention, is a process for producing a foamable resol type phenolic resin molding or forming material containing a liquid resol type phenolic resin, a foaming agent, a foam stabilizer, an acid curing agent and an additive, the process comprising adding, as the above additive, a nitrogen-containing bridged cyclic compound having an average particle diameter of 80 µm or less when said liquid resol type phenolic resin and the above acid curing agent are mixed.

In the process of this invention, the liquid resol type phenolic resin, the foaming agent, the foam statilizer, the acid curing agent and the additive are those which are explained with regard to the above phenolic resin molding or forming material of this invention.

Further, advantageously, the nitrogen-containing bridged cyclic compound is added in the form of a mixture thereof with a plasticizer for a phenolic resin, preferably, at least one member selected from a polyester polyol, a polyether polyol and glycols.

In the process of this invention, it is preferred to employ a method in which a phenolic resin molding or forming material is continuously produced by feeding a liquid resol type phenolic resin, a foaming agent, a foam stabilizer, an acid curing agent and an additive to a mixer, stirring and mixing them to obtain a foamable resol type phenolic resin composition, injecting the thus-obtained composition between upper and lower face materials and heating the composition to foam and cure it, wherein an additive obtained by pre-mixing a nitrogen-containing bridged cyclic compound and the above plasticizer for a phenolic resin is fed to the mixture.

The phenolic resin foamed product of this invention will be explained below.

### [Phenol resin foamed product]

The phenolic resin foamed product of this invention is produced by foaming and curing the above-prepared foamable resol type phenolic resin molding or forming material (to be referred to as "foamable composition hereinafter). Specifically, examples of the production method includes (1) a forming method in which the foamable composition is foamed and cured on an endless conveyor belt, (2) a method in which the foamable composition is filled in a spot and then foamed and cured, (3) a method in which the foamable composition is filled in a mold and then foamed and cured under pressure, (4) a method in which the foamable composition is filled in a large space and then foamed and cured to form a foamed block, (5) a method in which the foamable composition is filled and foamed in a cavity while it is injected into the cavity under pressure, and other method in which the foamable composition is sprayed to a building wall with an on-site spray foaming machine to foam and cure it.

Of these methods, in the above (1) forming method that is conventionally employed in the field of building materials, the phenolic resin foamed product is produced in the form of plates by casting and applying the foamable composition on a face material placed on a continuously moving conveyor belt, further placing another face material on the cast and applied foamable composition to constitute a sandwich structure, leading the structure into a double conveyer belt type heating-curing furnace (temperature in furnace: normally 90°C or lower, preferably approximately 60 to 80°C), foaming and curing the foamable composition in the furnace (residence time period: approximately 2 to 10 minutes), shaping it to a predetermined thickness, and cutting the shaped and foamed product to a predetermined length.

The above face material is not specially limited, and it is preferred to use at least one member selected from glass fiber nonwoven fabric, spun bonded nonwoven fabric, aluminum foil clad nonwoven fabric, a metal plate, a metal foil, plywood, a calcium silicate plate, a gypsum board and a wood-cement board. There may be employed a constitution in which one face material is provided on one side of the phenolic resin foamed product or two face materials are provided on both sides thereof one each. When the face materials are provided on both sides, the face materials may be the same as, or different from, each other. Further, the face material may be later bonded with an adhesive.

The thus-obtained phenolic resin foamed product of this invention is normally practically used as one having a density in the range of 20 to 40 kg/m³. When it has a density of 25 to 35 kg/m³ employed from the viewpoint of a decrease in weight and a reduction in cost, it maintains strength and brittleness resistance to such an extent that it has no problem on practical utility although it is a little inferior in performance to a foamed product having a standard density of approximately 40 kg/m³, and it also has corrosion-inhibiting capability and has an excellent appearance.

### Examples

This invention will be explained further in detail below with reference to Examples, while this invention shall not in the least limited by these Examples. Phenolic resin foamed products obtained in Examples were measured for physical properties according to the following methods.

(1) Density (unit: kg/m³) : Measured according to JIS A 9511 (2006), 5.6.
(2) Brittleness resistance (unit: %): Measured according to JIS A 9511 (2003), 5.14.
(3) pH: 0.5 Gram of a phenolic resin foamed product, sample that was finely milled to 250 µm (60 mesh) or less with a mortar was weighed and placed in a 200-ml Erlenmeyer flask with a ground-in stopper, 100 ml of pure water was added, and the Erlenmeyer flask was stopped. The sample was stirred with a magnetic stirrer at room temperature (23 ±5°C) for 7 days and then measured with a pH meter.
(4) Compressive strength (N/cm²): Measured according to JIS A 9511 (2006), 5.9.
(5) Corrosion-inhibiting capability: On a galvanized iron sheet having a size of 300 mm x 300 mm (thickness 1 mm, plating coverage 120 g/m²) was placed a phenolic resin foamed product sample having the same size, and it was fixed so that it did not move thereon, to obtain a test piece. The test piece was placed in an accelerating environment of 40°C and 100 %RH and left therein for 24 hours, and then the test piece was visually evaluated for corrosiveness on contact surfaces of the galvanized iron sheet and the above sample.
(6) Viscosity (unit: mPa·s/25°C): Measured with a Brookfield rotational viscometer at a test temperature of 25°C according to JIS K 7117-1 (1991).
(7) Moisture percentage (unit: mass%): Measured by a Karl Fischer automatic volume titration method according to JIS K 6910 (2007), 5.18.
(8) Thermal conductivity [unit: W/(m'K)]: A phenolic resin foamed product sample (200 mm x 200 mm) was placed between a low-temperature plate at 10°C and a high-temperature plate at 30°C and measured with a thermal conductivity measuring apparatus [HC-074 304] (supplied by EKO Instruments Co., Ltd.) according to the calorimeter method of JIS A 1412-2 (1999).
(9) Average particle diameter: Measured with a Microtrac particle size distribution measuring apparatus "MT3000" (supplied by NIKKISO Co., Ltd.).
(10) Appearance: A cube having a size of 5 cm x 5 cm x 5 cm was taken out, roughened cells of 2 mm or more that appeared on four sides free of the upper or lower face material were visually counted, and the total number thereof was evaluated in the light of the following ratings to determine an appearance (cell roughening).
   (i) Good O:less than 10 counts of roughened cells
   (ii) Good to some extent Δ: more than 10 but 40 counts or less of roughened cells
   (iii) Defective X: over 40 counts of roughened cells

### <Preparation of liquid resol type phenolic resin>

A three-necked flask having a refluxer, a thermometer and a stirrer was charged with 1,600 g of phenol and 38 g of a 50 mass% sodium hydroxide aqueous solution, and 2,282 g of 47 mass% formalin was dividedly charged, followed by a reaction at 80°C for 180 minutes. Then, the reaction mixture was cooled to 40°C, neutralized with a 50 mass% p-toluenesulfonic acid aqueous solution and dehydration-concentrated under reduced pressure under heat to give 2,830 g of a liquid resol type phenolic resin. The resin had a viscosity of 15,000 mPa·s/25°C and a moisture percentage of 9.2 mass%.

### Example 1

First, 3 parts by mass of a silicone foam stabilizer (trade name "L-5420" supplied by Nippon Unicar Company Limited) and 8 parts by mass of normal pentane (supplied by SK Sangyo K.K.) were added to 100 parts by mass of the above-prepared liquid resol type phenolic resin, they were mixed, and the mixture was temperature-adjusted to 5°C. The total amount of the obtained mixture, 2 parts by mass of hexamethylenetetramine (average particle diameter 11 µm) as an additive and 13 parts by mass of xylenesulfonic acid (trade name: TAYCATOX 110, supplied by TAYCA) as an acid curing agent were stirred and mixed in a pin mixer to prepare a foamable resol type phenolic resin molding or forming material. Without interruption, this molding or forming material was discharged into a metal mold frame (length 300 mm x width 300 mm x height 50 mm) having a glass nonwoven fabric laid therein, and a glass nonwoven fabric of the same kind was immediately placed thereon to form a sandwich structure. Further, an upper cover iron plate was placed on the upper surface of the mold frame, followed by mold clamping, and the thus-obtained set was placed in a dryer at 80°C, followed by foaming and curing for 7 minutes to produce a phenolic resin foamed product. Table 1 shows the physical properties of the foamed product.

### Example 2

A phenolic resin foamed product was produced in the same manner as in Example 1 except that 2 parts by mass of calcium carbonate as an inorganic filler was added to 100 parts by mass of the liquid resol type phenolic resin and that the amount of the acid curing agent was changed to 14 parts by mass. Table 1 shows the physical properties of the foamed product.

### Example 3

A phenolic resin foamed product was produced in the same manner as in Example 1 except that the average particle diameter of the hexamethylenetetramine was changed to 36 µm. Table 1 shows the physical properties of the foamed product.

### Example 4

A phenolic resin foamed product was produced in the same manner as in Example 1 except that the average particle diameter of the hexamethylenetetramine was changed to 70 µm. Table 1 shows the physical properties of the foamed product.

### Example 5

To 100 parts by mass of the same liquid resol type phenolic resin as that used in Example 1 were added 3 parts by mass of castor oil ethylene oxide adduct (trade name "D225", supplied by Takemoto Oil and Fat Co., Ltd.) as a foam stabilizer and 10 parts by mass of a mixture of isopropyl chloride with normal pentane as a foaming agent, they were mixed, and the mixture was temperature-adjusted to 5°C. The total amount of the thus-prepared mixture, 2 parts by mass of hexamethylenetetramine (average particle diameter 11 µm) as an additive and 13.5 parts by mass of a mixture of toluenesulfonic acid:xylenesulfonic acid = about 2:1 (ratio by mass) as an acid curing agent were stirred and mixed in a pin mixer to prepare a foamable resol type phenolic resin molding or forming material. Without interruption, a phenolic resin foamed product was produced in the same manner as in Example 1. Table 1 shows the physical properties of the thus-obtained foamed product.

### Example 6

A phenolic resin foamed product was produced in the same manner as in Example 5 except that 2 parts by mass of the hexamethylenetetramine (average particle diameter 11 µm) used in Example 5 was replaced with a mixture prepared by mixing 5 parts by mass of polyester polyol (viscosity: 1,200 mPa·s/25°C) with 2 parts by mass of hexamethylenetetramine (average particle diameter 5.2 µm). Table 1 shows the physical properties of the thus-obtained foamed product.

### Examples 7, 8 and 9

Three kinds of phenolic resin foamed products were produced in the same manner as in Example 6 except that the particle size (average particle diameter 5.2 µm) of the hexamethylenetetramine used in Example 6 was changed to a particle size (average particle diameter 35 µm, Example 7), a particle size (average particle diameter 50 µm, Example 8) and a particle size (average particle diameter 70 µm, Example 9). Table 1 shows the physical properties of the thus-obtained foamed products.

### Example 10

A phenolic resin foamed product having a density of 40 kg/m³ was produced in the same manner as in Example 5 except that the amount of the mixture of isopropyl chloride with normal pentane as a foaming agent in Example 5 was changed from 10 parts by mass to 8 parts by mass. Table 1 shows the physical properties of the thus-obtained foamed product.

### Comparative Examples 1 and 2

Two kinds of phenolic resin foamed products were produced in the same manner as in Example 1 except that the particle size (average particle diameter 11 µm) of the hexamethylenetetramine in Example 1 was changed to a particle size (average particle diameter 90 µm) and a particle size (average particle diameter 141 µm). Table 2 shows the physical properties of the thus-obtained foamed products.

### Comparative Example 3

A phenolic resin foamed product was produced in the same manner as in Example 6 except that the particle size (average particle diameter 5.2 µm) of the hexamethylenetetramine in Example 6 was changed to a particle size (average particle diameter 90 µm). Table 2 shows the physical properties of the thus-obtained foamed product.

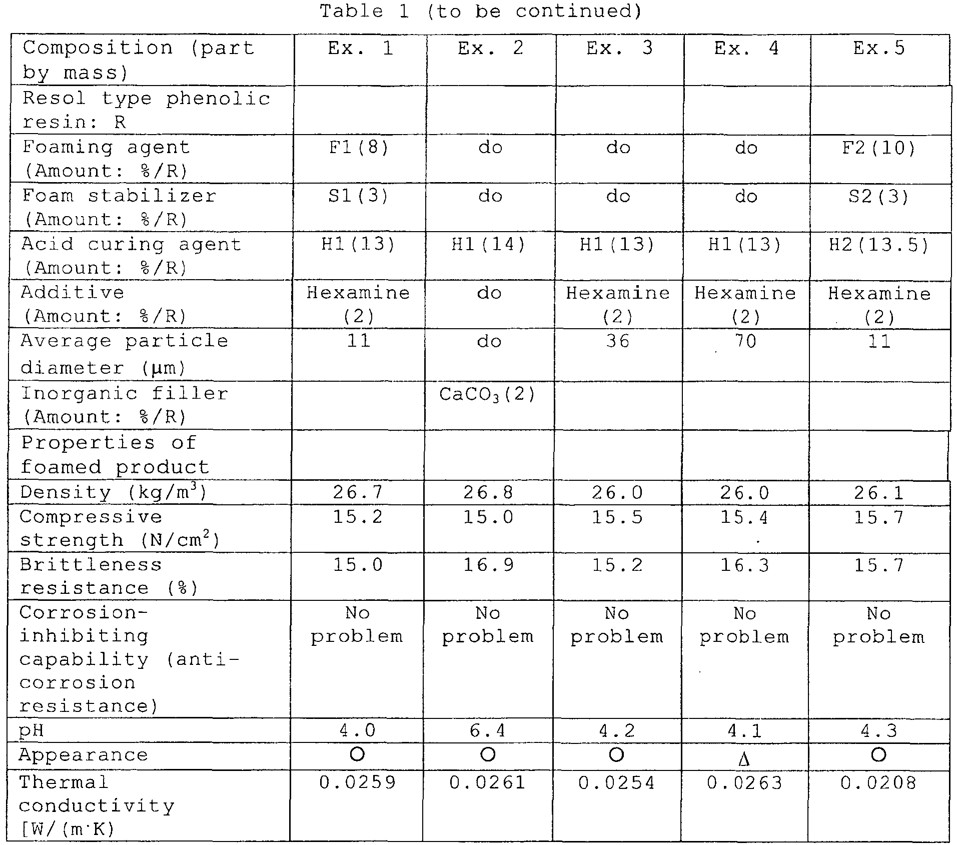

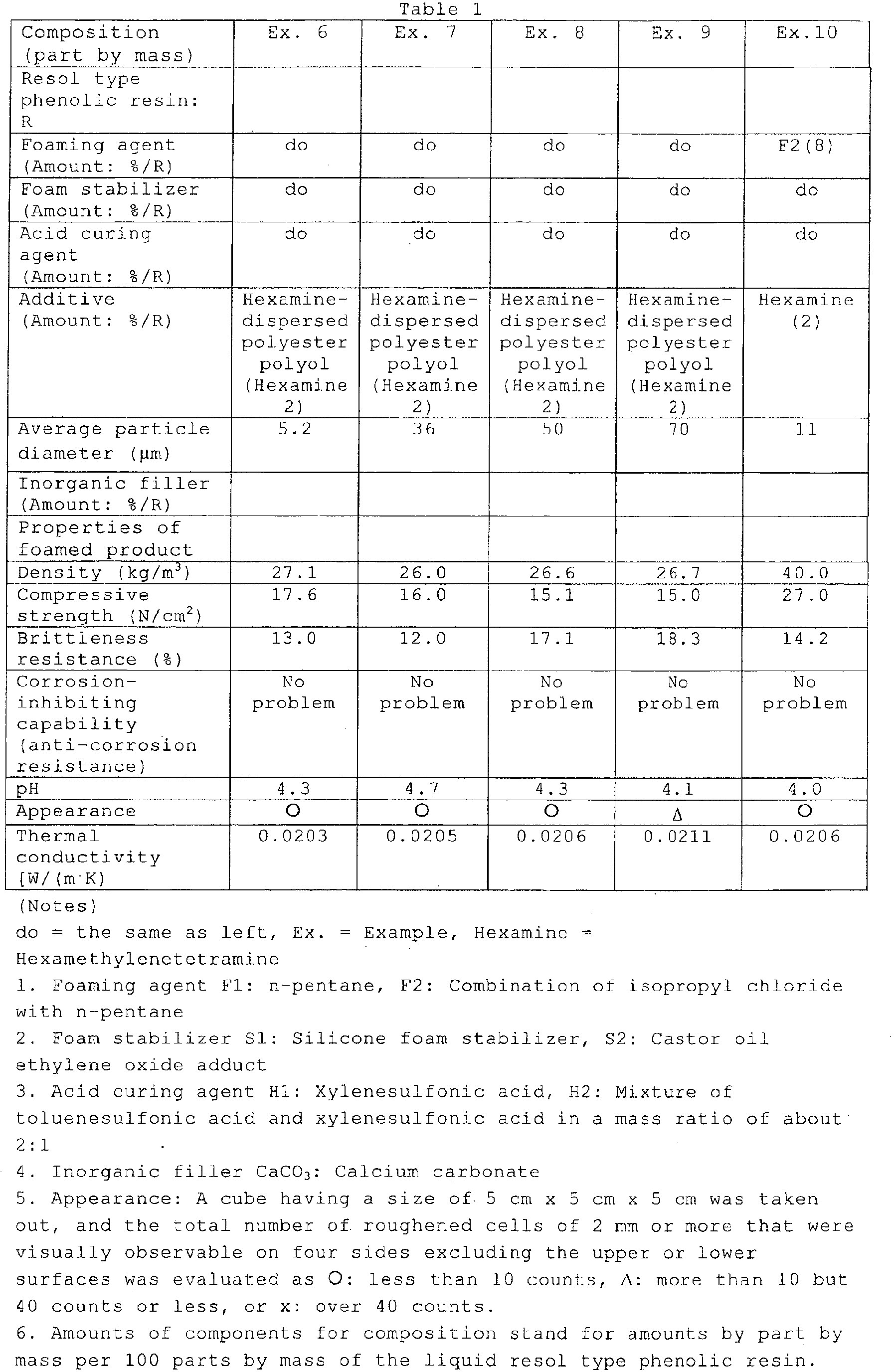

**Table 2**

| Composition (part by mass) | CEx. 1 | CEx. 2 | CEx. 3 |
|---|---|---|---|
| Resol type phenolic resin: R | | | |
| Foaming agent (Amount: %/R) | F1(8) | do | F2 (10) |
| Foam stabilizer (Amount: %/R) | S1(3) | do | S2 (3) |
| Acid curing agent (Amount: %/R) | H1 (13) | do | H2(13.5) |
| Additive (Amount: %/R) | Hexamine (2) | Hexamine (2) | Hexamine-dispersed polyester polyol (Hexamine 2) |
| Average particle diameter (µm) | 90 | 141 | 90 |
| Inorganic filler (Amount: %/R) | | | |
| Properties of foamed product | | | |
| Density (kg/m³) | 26.0 | 26.9 | 26.6 |
| Compressive strength (N/cm²) | 14.1 | 7.0 | 13.8 |
| Brittleness resistance (%) | 18.5 | 25.4 | 18.3 |
| Corrosion-inhibiting capability (anticorrosion resistance) | No problem | Red rust occurred partly | No problem |
| pH | 4.1 | 3.5 | 4.1 |
| Appearance | x | x | x |
| Thermal conductivity [W/ (m·K) | 0.0274 | 0.0275 | 0.0277 |

| | | | |
|---|---|---|---|
| (Notes) do = the same as left, CEx. = Comparative Example, Hexamine = Hexamethylenetetramine 1. Foaming agent F1: n-pentane 2. Foam stabilizer S1: Silicone foam stabilizer 3. Acid curing agent H1: Xylenesulfonic acid 4. Appearance: A cube having a size of 5 cm x 5 cm x 5 cm was taken out, and the total number of roughened cells of 2 mm or more that were visually observable on four sides excluding the upper or lower surfaces was evaluated as ○: less than 10 counts, Δ: more than 10 but 40 counts or less, or x: over 40 counts. 5. Amounts of components for composition stand for amounts by part by mass per 100 parts by mass of the liquid resol type phenolic resin. | | | |

As is clear from comparative results shown in Tables 1 and 2, it is seen that conventionally and generally used powdery hexamethylenetetramine (average particle diameter 141 µm, Comparative Example 2), a finer particle size (average particle diameter 90 µm, Comparative Example 1) or even the specification in which it is used in the form of a dispersion thereof in a low-viscosity polyester polyol (Comparative Example 3) has failed to achieve the object of this invention. According to the specification in which hexamethylenetetramine having an average particle diameter of 80 µm or less is used (Examples 1 and 3) or the specification in which it is used in the form of a dispersion thereof in polyester polyol (Examples 6 to 9), however, it has been found that in spite of a decreased density of 26 kg/m³, their performances having no problem in practical utility are maintained although the performances are a little inferior to those of a foamed product (Example 10) having a standard density of 40 kg/m³, and that they are also excellent in appearance over conventional examples. On the other hand, it has been found that when hexamethylenetetramine having a somewhat large particle size (average particle diameter 70 µm) is used (Examples 4 and 9), each is somewhat poor in appearance as compared with that in Example 1.

### [Industrial Utility]

From the foamable resol type phenolic resin molding or forming material of this invention, there can be produced a phenolic resin foamed product having in particular an improved appearance, having practical strength and brittleness resistance and having a high pH and excellent corrosion-inhibiting capability under advantageous foamability and curability.

## Claims

1. A foamable resol type phenolic resin molding or forming material that is a foamable resol type phenolic resin molding or forming material comprising a liquid resol type phenolic resin, foaming agent, a foam stabilizer, an acid curing agent and an additive, the additive being a nitrogen-containing bridged cyclic compound having an average particle diameter of 80 µm or less.

2. The foamable resol type phenolic resin molding or forming material as recited in claim 1, wherein the nitrogen-containing bridged cyclic compound is hexamethylenetetramine.

3. The a foamable resol type phenolic resin molding or forming material as recited in claim 1 or 2, which further contains a plasticizer.

4. The foamable resol type phenolic resin molding or forming material as recited in any one of claims 1 to 3, wherein the foaming agent contains isopropyl chloride.

5. A phenolic resin foamed product formed by foaming and curing the foamable resol type phenolic resin molding or forming material recited in any one of claims 1 to 4.

6. The a phenolic resin foamed product as recited in claim 5, which has a density of 20 to 40 kg/m³, a pH of 4.0 or more, a compressive strength of 10 N/cm² or more and a brittleness resistance of 20 % or less.

7. A process for producing a foamable resol type phenolic resin molding or forming material containing a liquid resol type phenolic resin, a foaming agent, a foam stabilizer, an acid curing agent and an additive, which comprises adding, as the above additive, a nitrogen-containing bridged cyclic compound having an average particle diameter of 80 µm or less when said liquid resol type phenolic resin and said acid curing agent are mixed.

8. The process of claim 7, wherein the nitrogen-containing bridged cyclic compound is hexamethylenetetramine.

9. The process of claim 8, wherein the nitrogen-containing bridged cyclic compound is added in the form of a mixture thereof with a plasticizer for a phenolic resin.

10. The process of claim 9, wherein the plasticizer for a phenolic resin is at least one member selected from a polyester polyol, a polyether polyol and glycols.

11. The process of any one of claim 7 to 10, wherein the foaming agent contains isopropyl chloride.

12. The process of any one of claims 9 to 11, which comprises continuously producing a phenolic resin molding or forming material by feeding a liquid resol type phenolic resin, a foaming agent, a foam stabilizer, an acid curing agent and an additive to a mixer, stirring and mixing them to obtain a foamable resol type phenolic resin composition, injecting the thus-obtained composition between upper and lower face materials and heating the composition to foam and cure it, wherein said additive obtained by pre-mixing a nitrogen-containing bridged cyclic compound and a plasticizer for a phenolic resin is fed to the mixture.

## Patentansprüche

1. Schäumbarer Phenolharzformling oder Formmaterial vom Resoltyp, welches ein schäumbarer Phenolharzformling oder ein Formmaterial vom Resoltyp ist, umfassend ein flüssiges Phenolharz vom Resoltyp, einen Schaumbildner, einen Schaumstabilisator, ein Säurehärtungsmittel und ein Additiv, wobei das Additiv eine stickstoffhaltige verbrückte cyclische Verbindung mit einem durchschnittlichen Partikeldurchmesser von 80 µm oder weniger ist.

2. Schäumbarer Phenolharzformling oder Formmaterial vom Resoltyp gemäß Anspruch 1, wobei die stickstoffhaltige verbrückte cyclische Verbindung Hexamethylentetramin ist.

3. Schäumbarer Phenolharzformling oder Formmaterial vom Resoltyp gemäß Anspruch 1 oder 2, des Weiteren enthaltend einen Weichmacher.

4. Schäumbarer Phenolharzformling oder Formmaterial vom Resoltyp gemäß einem der Ansprüche 1 bis 3, wobei der Schaumbildner Isopropylchlorid enthält.

5. Geschäumtes Phenolharzprodukt, geformt durch Schäumen und Härten des schäumbaren Phenolharzformlings oder Formmaterials vom Resoltyp gemäß einem der Ansprüche 1 bis 4.

6. Geschäumtes Phenolharzprodukt gemäß Anspruch 5, welches eine Dichte von 20 bis 40 kg/m³, einen pH von 4,0 oder mehr, eine Druckbelastbarkeit von 10N/cm² oder mehr sowie eine Sprödigkeit von 20% oder weniger aufweist.

7. Verfahren zur Herstellung eines schäumbaren Phenolharzformlings oder Formmaterials vom Resoltyp, enthaltend ein flüssiges Phenolharz vom Resoltyp, einen Schaumbildner, einen Schaumstabilisator, ein Säurehärtungsmittel und ein Additiv, welches das Hinzufügen einer stickstoffhaltigen verbrückten cyclischen Verbindung mit einem durchschnittlichen Partikeldurchmesser von 80 µm oder weniger beim Vermischen des flüssigen Phenolharzes vom Resoltyp und des Säurehärtungsmittels als dem obigen Additiv umfasst.

8. Verfahren gemäß Anspruch 7, wobei die stickstoffhaltige verbrückte cyclische Verbindung Hexamethylentetramin ist.

9. Verfahren gemäß Anspruch 8, wobei die stickstoffhaltige verbrückte cyclische Verbindung in Form eines Gemischs mit einem Weichmacher für ein Phenolharz zugefügt wird.

10. Verfahren gemäß Anspruch 9, wobei der Weichmacher für ein Phenolharz wenigstens ein Mitglied der Gruppe ist, ausgewählt aus einem Polyesterpolyol, einem Polyetherpolyol und Glycolen.

11. Verfahren gemäß einem der Ansprüche 7 bis 10, wobei der Schaumbildner Isopropylchlorid enthält.

12. Verfahren gemäß einem der Ansprüche 9 bis 11, welches umfasst: kontinuierliche Herstellung eines Formlings oder Formmaterials durch Zuspeisen eines flüssigen Phenolharzes vom Resoltyp, eines Schaumbildners, eines Schaumstabilisators, eines Säurehärtungsmittels und eines Additivs in einen Mischer, Rühren und Vermischen derselben unter Erhalt einer schäumbaren Phenolharzzusammensetzung vom Resoltyp, Einspritzen der so erhaltenen Zusammensetzung zwischen obere und untere Seitenmaterialien, und Erhitzen der Zusammensetzung unter Schäumen und Härten, wobei das durch Vormischen einer stickstoffhaltigen verbrückten cyclischen Verbindung und eines Weichmachers für ein Phenolharz erhaltene Additiv dem Gemisch zugespeist wird.

## Revendications

1. Matériau de moulage ou de mise en forme à base de résine phénolique de type résol expansible, qui est un matériau de moulage ou de mise en forme à base de résine phénolique de type résol expansible comprenant une résine phénolique liquide de type résol, un agent d'expansion, un stabilisateur de mousse, un agent acide de durcissement et un additif, l'additif étant un composé cyclique ponté et azoté ayant un diamètre moyenne de particule inférieure ou égale à 80 µm.

2. Matériau de moulage ou de mise en forme à base de résine phénolique de type résol expansible selon la revendication 1, dans lequel le composé cyclique ponté et azoté est l'hexaméthylènetétramine.

3. Matériau de moulage ou de mise en forme à base de résine phénolique de type résol expansible selon la revendication 1 ou 2, qui contient en outre un plastifiant.

4. Matériau de moulage ou de mise en forme à base de résine phénolique de type résol expansible selon l'une quelconque des revendications 1 à 3, dans lequel l'agent d'expansion contient du chlorure d'isopropyle.

5. Produit expansé en résine phénolique, formé par l'expansion et le durcissement du matériau de moulage ou de mise en forme à base de résine phénolique de type résol expansible selon l'une quelconque des revendications 1 à 4.

6. Produit expansé en résine phénolique selon la revendication 5, qui présente une masse volumique de 20 à 40 kg/m³, un pH de 4,0 ou plus, une résistance à la compression de 10 N/cm² ou plus et une résistance à la friabilité de 20 % ou moins.

7. Procédé de production d'un matériau de moulage ou de mise en forme à base de résine phénolique de type résol expansible contenant une résine phénolique liquide de type résol, un agent d'expansion, un stabilisateur de mousse, un agent acide de durcissement et un additif, qui comprend l'ajout, en tant qu'additif mentionné ci-dessus, d'un composé cyclique ponté et azoté ayant un diamètre moyen de particule inférieur ou égal à 80 µm quand ladite résine phénolique liquide de type résol et ledit agent acide de durcissement sont mélangés.

8. Procédé selon la revendication 7, dans lequel le composé cyclique ponté et azoté est l'hexaméthylènetétramine.

9. Procédé selon la revendication 8, dans lequel le composé cyclique ponté et azoté est ajouté sous la forme d'un mélange de celui-ci avec un plastifiant pour résine phénolique.

10. Procédé selon la revendication 9, dans lequel le plastifiant pour résine phénolique est au moins un élément choisi parmi un polyester polyol, un polyéther polyol et les glycols.

11. Procédé selon l'une quelconque des revendications 7 à 10, dans lequel l'agent d'expansion contient du chlorure d'isopropyle.

12. Procédé selon l'une quelconque des revendications 9 à 11, qui comprend la production continue d'un matériau de moulage ou de mise en forme à base de résine phénolique par l'introduction d'une résine phénolique liquide de type résol, d'un agent d'expansion, d'un stabilisateur de mousse, d'un agent acide de durcissement et d'un additif dans un mélangeur, leur agitation et leur mélange pour obtenir, une composition de résine phénolique de type résol expansible, l'injection de la composition ainsi obtenue entre des matériaux de parement supérieur et inférieur et le chauffage de la composition pour la dilater et la durcir, dans lequel ledit additif obtenu par le prémélange d'un composé cyclique ponté et azoté et un plastifiant pour résine phénolique est introduit dans le mélange.
